Europäisches Patentamt

European Patent Office

Office européen des brevets

(19)

(11) Numéro de publication : **0 112 229**
**B1**

(12)

# FASCICULE DE BREVET EUROPÉEN

(45) Date de publication du fascicule du brevet :
01.10.86

(21) Numéro de dépôt : 83402326.9

(22) Date de dépôt : 02.12.83

(51) Int. Cl.⁴ : **B 23 K   1/20**, B 23 K   1/08

(54) Dispositif destiné à la soudure des connexions de composants.

(30) Priorité : 15.12.82 FR 8221042

(43) Date de publication de la demande :
27.06.84 Bulletin 84/26

(45) Mention de la délivrance du brevet :
01.10.86 Bulletin 86/40

(84) Etats contractants désignés :
AT DE GB NL

(56) Documents cités :
US-A- 4 196 839

(73) Titulaire : COMPAGNIE EUROPEENNE DE COMPO-
SANTS ELECTRONIQUES LCC
50, rue Jean -Pierre Timbaud B.P. 301
F-92402 Courbevoie (FR)

(72) Inventeur : Bonhomme, Bernard
THOMSON-CSF SCPI 173, bld Haussmann
F-75379 Paris Cedex 08 (FR)

(74) Mandataire : Ruellan-Lemonnier, Brigitte et al
THOMSON-CSF SCPI 19, avenue de Messine
F-75008 Paris (FR)

## Description

La présente invention a pour objet un dispositif destiné à la soudure des connexions de composants et comprenant un dispositif de préchauffage de ceux-ci.

On connaît de l'art antérieur des techniques de soudure des connexions de composants mettant en œuvre une opération de trempé dans un bain fluxant puis une opération de trempé dans un bain de soudure, des composants préalablement disposés sur une réglette. Cette opération de trempé peut être éventuellement précédée d'un préchauffage des composants qui est réalisé dans un four aussi proche que possible du bain de soudure. Dans le meilleur des cas, le retrait des composants du four et leur transfert vers le bain de soudure, et après la soudure, le refroidissement par mise en contact avec l'air extérieur, constituent pour les composants deux chocs thermiques susceptibles de les détériorer. C'est ainsi, par exemple, qu'apparaissent des fissures dans les condensateurs céramiques multi-couches.

L'invention a pour objet un dispositif destiné à la soudure des connexions de composants notamment de condensateurs céramiques, et comprenant un dispositif de préchauffage de ceux-ci et qui évite les chocs thermiques préjudiciables.

Dans ce but, il est caractérisé en ce qu'il comporte un tube chauffant constituant le dispositif de préchauffage et comportant une ouverture sur toute la longueur de sa génératrice supérieure et présentant en outre en un endroit donné de sa partie inférieure une échancrure, et en ce qu'il comporte également un poste de soudure disposé dans ladite échancrure, ainsi qu'un dispositif pour faire avancer le long du tube chauffant les composants maintenus mécaniquement par des éléments conducteurs destinés à former les connexions après soudure. .

Le tube chauffant peut être un tube électriquement conducteur notamment un tube cylindrique de révolution dont les extrémités sont reliées à une alimentation électrique. L'alimentation électrique peut être un générateur de basse tension sous forte intensité.

Selon un mode de réalisation préféré, le tube chauffant comporte dans la zone de l'échancrure au moins un pontage conducteur compensant en section l'échancrure ménagée à la partie inférieure du tube de manière à éviter une surchauffe à cet endroit. Le pontage peut être constitué de deux ailettes soudées latéralement sur chacun des bords de la rainure du tube chauffant.

L'échancrure peut être constituée par une découpe de profil trapézoïdal.

Le poste de soudure est de préférence constitué par une fontaine à soudure. Elle peut ainsi comporter deux conduits d'amenée de soudure débouchant en vis-à-vis l'un de l'autre sur le trajet de passage des composants, notamment à travers une ouverture d'un bac de soudure.

Le dispositif selon l'invention comporte avantageusement un dispositif pour faire circuler un gaz neutre autour des conduits d'amenée de soudure de manière à éviter l'oxydation de la soudure.

La circulation du gaz neutre est, selon une première variante, réalisée à partir d'une amenée sous pression au-dessus du niveau du bain de soudure, de manière à produire un préchauffage dudit gaz. Selon une deuxième variante, la circulation du gaz neutre est réalisée par une amenée de gaz neutre sous pression se prolongeant par une section de tube plongeant dans le bain de soudure, ce dernier se terminant par un canal de sortie dirigeant le gaz, préchauffé lors de son passage dans le tube plongeant dans le bain de soudure, vers lesdits conduits d'amenée de soudure.

Selon un mode préféré, des parois canalisent l'écoulement du gaz neutre autour des conduits vers l'intérieur du tube chauffant de manière à assurer un balayage de celui-ci par le gaz préchauffé.

Pour un type de composants donné, la vitesse d'avance peut être telle qu'elle assure une montée en température du composant jusqu'à ce qu'il atteigne au niveau de l'échancrure environ la température de la soudure. L'échancrure peut être par exemple située au 4/5ième de la longueur du tube chauffant.

L'invention sera mieux comprise à la lecture de la description qui va suivre, donnée à titre d'exemple non limitatif, en se reportant aux dessins ci-annexés où :

la figure 1   représente en vue latérale un dispositif selon l'invention ;

la figure 2   représente en vue latérale un détail de la figure 1 montrant un mode de réalisation d'un tube chauffant selon l'invention au niveau de son échancrure ;

la figure 3a   représente une coupe suivant BB' de la figure 2 ;

la figure 3b   représente en vue de dessus une portion d'un tube chauffant suivant l'invention et montrant les deux ailettes constituant un pontage au niveau de l'échancrure du tube chauffant ;

la figure 4   représente une courbe de température en dynamique des composants suivant la longueur du tube ;

la figure 5   représente en coupe transversale une fontaine à soudure à circulation de gaz neutre selon un mode de réalisation de l'invention.

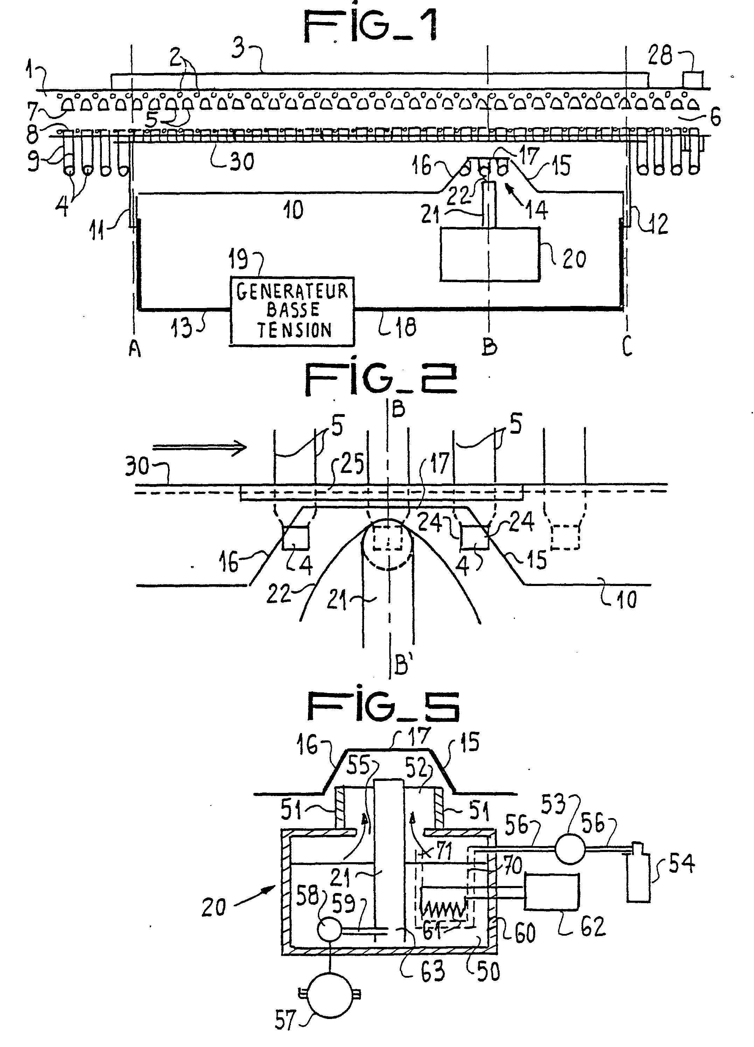

Selon la figure 1, une bande-support 1, portant des connexions 5, est munie d'une pluralité de paires d'encoches respectivement supérieures 7 et inférieures 8, dans lesquelles viennent se glisser les connexions 5 en forme d'épingle. Des condensateurs 4 sont fixés entre les deux bras 9 des connexions 5 sensiblement à l'extrémité de ceux-ci. Les deux bras 9 de la connexion 5 étant reliés entre eux pour former une épingle, ils exercent mutuellement l'un sur l'autre une réaction qui provoque un pincement du composant 4, par exemple un condensateur. Ces épingles sont conçues de manière telle que leurs bras maintiennent une force d'application suffisante sur les connexions électriques latérales du composant pour éviter que le pavé qu'il constitue ne se désolidarise des bras avant l'opération de soudure. On pourra avantageusement utiliser à cet effet des connexions en forme d'épingle telles que celles décrites dans la demande de brevet français 2 505 548 déposée le 8 mai 1981 par la Demanderesse et intitulée « connexion en forme d'épingle pour composant électrique muni de deux zones de contact et son utilisation pour la connexion dudit composant ».

D'autre part, les encoches 7 et 8 de la bande-support 1 peuvent être avantageusement réalisées de telle manière que l'encoche supérieure 7 soit plus large que l'encoche inférieure 8, de telle sorte que l'épingle étant introduite avec la base du U située du côté de l'encoche supérieure 7, la pénétration des bras dans les encoches supérieure et inférieure provoque le resserrement progressif de ceux-ci. Une telle bande-support est décrite dans la demande de brevet français 2 505 547 déposée le 8 mai 1981 par la Demanderesse et intitulée « bande support de connexions pour condensateurs, bande munie de telles connexions et son utilisation pour la fabrication de condensateurs ».

La bande-support 1 porte également deux rangées de trous 2 disposés entre les épingles de connexions 5 et destinés à permettre l'entraînement de la bande-support 1 par des moyens 23 connus de l'homme de l'art. Un tube 10 est disposé suivant l'axe de déplacement de la bande-support 1 et présente à sa partie supérieure une ouverture 30 qui s'étend sur toute la longueur de sa génératrice supérieure de manière à permettre aux extrémités des bras 9 des épingles 5 qui dépassent de la partie inférieure de la bande-support 1 de pénétrer à l'intérieur du tube 10. Le tube 10 présente à ses extrémités des pattes de connexion électrique 11 et 12 reliées à un générateur basse tension 19 par des connexions électriques 13 et 18 dimensionnées de manière à supporter des intensités élevées. Le tube 10 a en effet pour fonction d'assurer le préchauffage des composants 15 en vue de leur soudure en amenant ceux-ci à une température aussi voisine que possible de celle de la soudure. Par exemple, dans le cas de soudure à solidus élevé (par exemple les soudures riches en plomb), la température de la soudure peut être de l'ordre de 350° environ, à savoir 30 à 40° au-dessus de la température de liquidus (cette température est de 316 °C pour une composition eutectique comportant 97,5 % de plomb, 0,75 % d'étain et 1,75 % d'argent). Dans ces conditions, la puissance dissipée sera de l'ordre de 700 à 1 000 watts pour un tube en acier Inox de diamètre 50 mm et d'une longueur d'un mètre environ. Comme la résistivité de l'acier Inox est faible, la résistance ohmique du tube chauffant sera également faible, ce qui conduira à des intensités de courant relativement élevées pour des tensions d'alimentation basses.

Le tube chauffant 10 présente vers sa partie aval une échancrure 14 de forme trapézoïdale comportant un bord supérieur 17 bordé de deux rebords latéraux 15 et 16. Dans cette échancrure, est disposée une fontaine à soudure 20 qui asperge les composants 4 passant au niveau de l'échancrure par l'intermédiaire de deux tubes 21 projetant de la soudure 22. La fontaine à soudure 20 est d'un type classique. Elle comporte (voir figure 5) un bain de soudure 50 et une turbine d'alimentation 58 permettant d'assurer la projection de soudure par les tubes 21. Selon une réalisation particulièrement avantageuse, un dispositif de ventilation 53, 54, 56 aspire un gaz neutre, par exemple, le plus aisément disponible à savoir de l'azote et le fait passer dans un tube plongeant dans le bain de soudure de manière à le chauffer à une température voisine de celle de la soudure. Ce gaz chaud est alors insufflé à l'intérieur du tube 10 de manière d'une part à produire une circulation de fluide permettant une meilleure homogénéisation de la température dans le tube notamment au niveau de l'échancrure 14 et d'éviter que la soudure qui est projetée par la fontaine à soudure 20 soit mise en contact avec l'oxygène de l'air. En effet, si un tel contact se produisait, il faudrait nettoyer souvent le réservoir 60 de soudure de la fontaine de soudure 20 étant donné l'oxydation progressive intervenant.

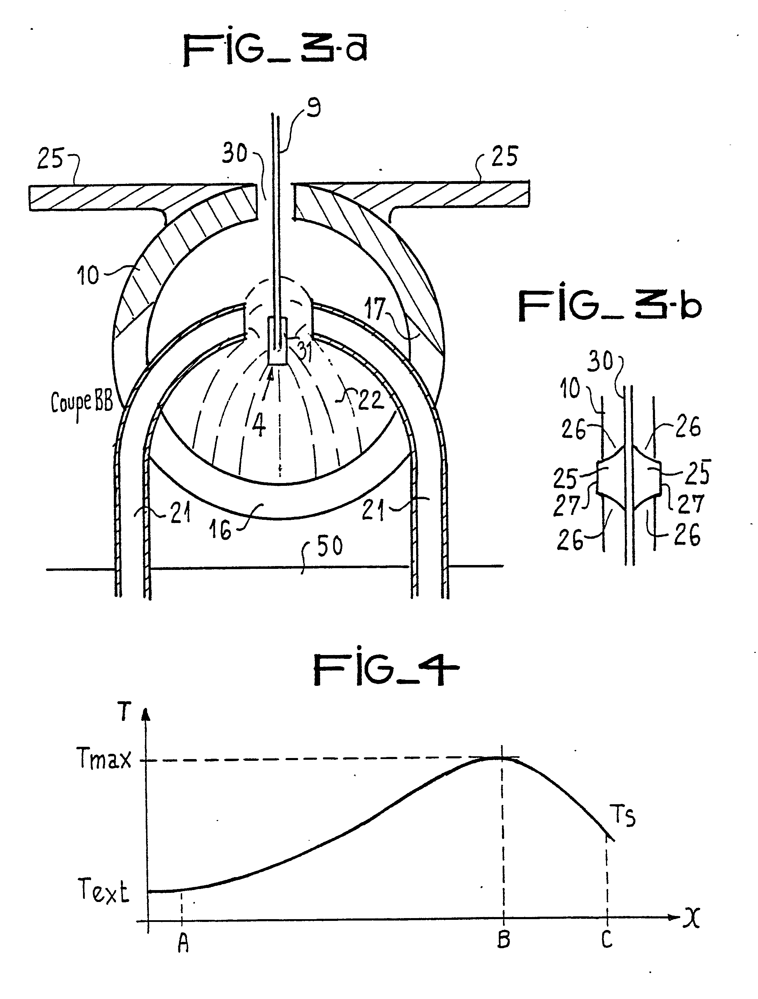

Aux figures 2, 3a et 3b, on a également représenté les pontages conducteurs constitués par deux ailettes 25 soudées latéralement sur chacun des bords de l'ouverture 30 du tube chauffant 10. Ces pontages ont pour fonction de compenser en section la partie usinée du tube dans la zone de l'échancrure 14 pour éviter une surchauffe à cet endroit et donc de maintenir un profil de température bien régulier. Les pontages sont donc réalisés de telle sorte que la section électrique du tube 10 est maintenue constante en tout point dans l'échancrure et hors de l'échancrure.

Un tel profil est représenté en vue de dessus à la figure 3b où les ailettes 25 comportent chacune deux régions profilées 26 s'évasant vers l'extérieur jusqu'à un sommet 27 plat correspondant au sommet 17 de l'échancrure 14.

La figure 3a montre par ailleurs comment les composants 4 sont arrosés par la soudure 22 par l'intermédiaire des tubes 21 qui sont recourbés de manière à venir en vis-à-vis et projeter la soudure 22 selon deux axes pratiquement horizontaux légèrement au-dessus du niveau du composant 4. La soudure adhère alors par capillarité au niveau des pattes conductrices 9 en contact avec les terminaisons conductrices 31 du composant 4, et la soudure en excès retombe dans le bain de soudure 50. On remarquera par ailleurs que, comme il est connu, les composants 4 sont soumis avant leur entrée dans le tube chauffant 10 à un bain fluxant classique destiné à faciliter la soudure.

La figure 4 représente, avec en abscisse la longueur du tube, la courbe de température à laquelle sont soumis les composants lors de leur déplacement. A l'entrée du tube en A, les composants sont à la température extérieure $T_{ext}$. La vitesse de déplacement est choisie de telle manière que la température maximale $T_{max}$ atteinte par ceux-ci est obtenue au milieu de l'échancrure 14 (point B) et le chauffage est tel que cette température correspond à une température légèrement inférieure à la température de la soudure 22 à sa sortie des tubes 21. En aval de l'échancrure 14, la température des composants 4 s'abaisse à nouveau progressivement. Ceci est dû à l'influence de l'extrémité aval du tube chauffant 10 situé au point C, laquelle apporte l'influence de la température extérieure qui diminue l'efficacité du chauffage. En pratique, l'échancrure peut être avantageusement située au 4/5ième de la longueur du tube chauffant, c'est-à-dire que 80 % de la longueur du tube est utilisée pour le chauffage progressif des composants.

Pour une puissance de chauffage donnée, la vitesse de défilement des composants sera d'autant plus faible que ceux-ci sont plus volumineux. Pour des composants donnés, une augmentation de la puissance de chauffage du tube chauffant 10 permettra d'augmenter la vitesse de défilement des composants. On s'en tiendra en pratique à une cadence correspondant au traitement de 60 à 80 composants par minute.

Selon la figure 5, la fontaine à soudure 20 comporte un bac 60 rempli jusqu'à un niveau donné de soudure liquide 50 qui est maintenue en température par un dispositif de chauffage comportant une résistance électrique 61 immergée dans la soudure et alimentée par un dispositif de régulation 62. Les tubes 21 plongent dans la soudure par leurs extrémités inférieures 63 et la circulation de soudure est assurée par une turbine 58 immergée dans la soudure 50 et entraînée par un moteur 57 situé à l'extérieur du bac 60. La turbine 58 refoule la soudure liquide 50 par deux conduites de refoulement 59 débouchant chacune à l'extrémité inférieure 63 d'un tube 21. Une circulation de gaz neutre est assurée au-dessus de la surface de la soudure 50 à partir d'une bouteille d'azote comprimée 54, d'une vanne de régulation 53 et de conduites 56 qui débouchent à la partie supérieure du bac 60 au-dessus du niveau de la soudure 50. Le bac 60 présente à l'une de ses extrémités longitudinales une ouverture 55 qui laisse passer les tubes 21 et la circulation d'azote autour de ceux-ci. La conduite 56 débouche à l'autre extrémité longitudinale du bac 60 de manière à permettre que l'azote qui circule parvienne à l'ouverture 55 à une température relativement voisine de celle du bain de soudure 50. Cette mise en température est facilitée par le fait qu'on peut se contenter d'un débit d'azote relativement faible. Selon une variante préférée, le tube 56 se prolonge par une section de tube 70 qui plonge dans la soudure et qui se prolonge par un canal de sortie 71 situé de préférence au voisinage de l'ouverture 55 et dirigeant vers celle-ci le gaz chauffé par le bain de soudure lors de sa circulation dans le serpentin 70. L'ouverture 55 est bordée par des parois longitudinales 51 et latérales 52 dont la partie supérieure débouche à la partie inférieure de l'échancrure 14 de manière à faciliter la circulation d'azote en diminuant les fuites à l'extérieur du tube chauffant 10. Les composants étant, comme on l'a dit plus haut plongés dans un bain de flux avant leur entrée dans le tube chauffant 10, la circulation d'azote à travers celui-ci a également pour fonction d'entraîner les vapeurs de flux se produisant lors de la montée en température du composant 4 dans le tube chauffant 10.

On remarquera par ailleurs que la circulation de gaz neutre à travers le tube chauffant ne procure qu'un apport thermique négligeable. En effet, le chauffage des composants est effectué principalement par le rayonnement calorifique émis par les parois chaudes du tube 10. Il en résulte par ailleurs que l'utilisation d'un tube 10 cylindrique de révolution est particulièrement avantageuse en ce qu'elle permet une concentration du flux calorifique émis par les parois, sur les composants qui seront alors situés à peu près sur l'axe du tube pour une efficacité maximale.

L'invention ne se limite pas aux modes de réalisation décrits et représentés. En particulier, elle convient à la soudure des connexions de tous types de composants pouvant être portés à une température voisine de celle d'un bain de soudure. D'autre part, le tube 10, qui peut être par ailleurs de section quelconque, peut être isolé thermiquement par rapport à l'extérieur et/ou bien être chauffé par d'autres moyens que ceux décrits.

D'autre part, l'invention a été décrite dans le cas d'une soudure effectuée en continu. Il va de soi que les composants peuvent être amenés dans le tube de manière discontinue, par exemple disposés sur des réglettes positionnées elles-mêmes sur des chariots entraînés avec une vitesse d'avance constante ou variable et de nature à assurer aux composants une montée en température et un refroidissement sans choc thermique.

## Revendications

1. Dispositif destiné à la soudure des connexions et de composants comprenant un dispositif de préchauffage de ceux-ci, caractérisé en ce qu'il comporte un tube chauffant (10) constituant le dispositif de préchauffage et comportant une ouverture (30) sur toute la longueur de sa génératrice supérieure et présentant en outre en un endroit donné de sa partie inférieure une échancrure (14), et en ce qu'il comporte également un poste de soudure (20, 21) disposé dans ladite échancrure (14) ainsi qu'un dispositif (23) pour faire avancer le long du tube chauffant (10) les composants (4) maintenus mécaniquement par des éléments conducteurs

destinés à former les connexions (24) après soudure.

2. Dispositif selon la revendication 1, caractérisé en ce que le tube chauffant (10) est un tube électriquement conducteur dont les extrémités (A, C) sont reliées à une alimentation électrique (19).

3. Dispositif selon la revendication 2, caractérisé en ce que le tube chauffant (10) est cylindrique de révolution.

4. Dispositif selon l'une des revendications 2 ou 3, caractérisé en ce que l'alimentation électrique (19) est un générateur de basse tension sous forte intensité.

5. Dispositif selon l'une des revendications 2 à 4, caractérisé en ce que, dans la zone de l'échancrure (14), le tube chauffant (10) comporte au moins un pontage conducteur (25) compensant en section l'échancrure (14) à la partie inférieure du tube de manière à éviter une surchauffe à cet endroit.

6. Dispositif selon la revendication 5, caractérisé en ce que le pontage (25) est constitué par deux ailettes conductrices soudées latéralement sur chacun des bords de l'ouverture du tube chauffant (10).

7. Dispositif selon l'une des revendications précédentes, caractérisé en ce que l'échancrure (14) est constituée par une découpe (15, 16, 17) de profil trapézoïdal.

8. Dispositif selon l'une des revendications précédentes, caractérisé en ce que le poste de soudure (20, 21) est constitué par une fontaine à soudure.

9. Dispositif selon la revendication 8, caractérisé en ce que la fontaine à soudure comporte deux conduits (21) d'amenée de soudure plongeant dans un bain de soudure (50) et débouchant en vis-à-vis l'un de l'autre sur le trajet de passage des composants (4).

10. Dispositif selon la revendication 9, caractérisé en ce que les deux conduits (21) d'amenée de soudure débouchent en vis-à-vis l'un de l'autre à travers une ouverture (55) d'un bac de soudure (60).

11. Dispositif selon l'une des revendications 9 ou 10, caractérisé en ce qu'il comporte un dispositif (53, 54, 56) pour faire circuler un gaz neutre autour des conduits (21) d'amenée de soudure de manière à éviter l'oxydation de la soudure.

12. Dispositif selon la revendication 11, caractérisé en ce que ledit dispositif pour faire circuler un gaz neutre comporte une amenée (56) de gaz neutre sous pression au-dessus du niveau du bain de soudure (50) de manière à produire un préchauffage dudit gaz.

13. Dispositif selon la revendication 11, caractérisé en ce que ledit dispositif pour faire circuler un gaz neutre comporte une amenée (56) de gaz neutre sous pression se prolongeant par une section de tube (70) plongeant dans le bain de soudure (50) et un canal de sortie (71) dirigeant le gaz préchauffé lors de son passage dans le tube (70) plongeant dans le bain de soudure (50) vers lesdits conduits (21) d'amenée de soudure.

14. Dispositif selon l'une des revendications 12 ou 13, caractérisé en ce qu'il comporte des parois canalisant l'écoulement du gaz neutre autour des conduits (21) vers l'intérieur du tube chauffant (10) de manière à assurer un balayage de celui-ci par le gaz préchauffé.

15. Dispositif selon l'une des revendications précédentes, caractérisé en ce que pour un type de composant donné, la vitesse d'avance est telle qu'elle assure une montée en température du composant (4) jusqu'à ce qu'il atteigne au niveau de l'échancrure (14) environ la température de la soudure.

16. Dispositif selon la revendication 15, caractérisé en ce que l'échancrure est située au 4/5ième de la longueur du tube chauffant (10).

## Claims

1. Device for soldering connections of components, comprising a device for the preheating thereof, characterized in that it comprises a heating tube (10) forming the preheating device and comprising an opening (30) over the entire length of its upper generatrix, and further having a recess (14) at a given location of its lower part, and in that it further comprises a soldering station (20, 21) arranged within said recess (14) and a device (23) for advancing the components (4) along the heating tube (10) while they are mechanically held through conductive members intended to form the connections (24) after soldering.

2. Device according to claim 1, characterized in that the heating tube (10) is an electrically conducting tube the ends (A,C) of which are connected to an electric supply.

3. Device according to claim 2, characterized in that the heating tube (10) is a cylinder of revolution.

4. Device according to any of claims 2 or 3, characterized in that the electric supply (19) is a low voltage, high intensity generator.

5. Device according to any of claims to 4, characterized in that the heating tube (10) comprises within the zone of the recess (14) at least one conductive bridge (25) compensating for the section of the recess (14) at the lower portion of the tube in a manner to avoid an overheating at this location.

6. Device according to claim 5, characterized in that the bridge (25) is formed by two conductive wings laterally soldered to each of the edges of the opening of the heating tube (10).

7. Device according to any of the preceding claims, characterized in that the recess (14) is formed by a cutout (15, 16, 17) of trapezoidal profile.

8. Device according to any of the preceding claims, characterized in that the soldering station (20, 21) is formed by a solder fountain.

9. Device according to claim 8, characterized in that the solder fountain comprises two solder supply conduits (21) immersed into a solder bath

(50) and opening in mutual facing relationship on the traveling path of the components (4).

10. Device according to claim 9, characterized in that the two solder supply conduits (21) open in mutual facing relationship across an opening (55) of a solder basin (60).

11. Device according to any of claims 9 and 10, characterized in that it comprises a device (53, 54, 56) for circulating a neutral gas arround the solder supply conduits (21) in a manner to avoid oxidation of the solder.

12. Device according to claim 11, characterized in that said device for circulating a neutral gas comprises a pressurized neutral gas supply (56) above the level of the solder bath (50) in a manner to produce a preheating of said gas.

13. Device according to claim 11, characterized in that said device for circulating a neutral gas comprises a neutral pressurized gas supply (56) extended by a tube section (70) immersed into the solder bath (50) and an output channel (71) directing the gas preheated during its passage through the tube (70) immersed into the solder bath (50) toward said solder supply conduits (21).

14. Device according to any of claims 12 and 13, characterized in that it comprises walls channelizing the neutral gas flow around the conduits (21) to the inside of the heating tube (10) in a manner to ensure the venting thereof by the preheated gas.

15. Device according to any of the preceding claims, characterized in that, for a given type of component, the advancing speed is such that it ensures a temperature rise of the component (4) until it reaches substantially the temperature of the solder at the level of the recess (14).

16. Device according to claim 15, characterized in that the recess is located at 4/5th of the length of the heating tube (10).

**Patentansprüche**

1. Vorrichtung für das Löten der Anschlüsse und von Bauteilen, mit einer Vorrichtung zur Vorerwärmung derselben, dadurch gekennzeichnet, daß sie ein Heizrohr (10) umfaßt, welches die Vorerwärmvorrichtung bildet und eine Öffnung (30) über die gesamte Länge seiner oberen Mantellinie aufweist sowie an einer gegebenen Stelle seines unteren Teiles eine Aussparung (14) besitzt, und daß sie ferner eine Lötstation (20, 21) umfaßt, die in der genannten Aussparung (14) angeordnet ist, sowie eine Vorrichtung (23) aufweist, um in Längsrichtung des Heizrohres (10) die Bauteile (4) vorwärtszubewegen, während diese mechanisch durch Leiterelemente gehalten werden, die zur Bildung der Anschlüsse (24) nach dem Löten bestimmt sind.

2. Vorrichtung nach Anspruch 1, dadurch gekennzeichnet, daß das Heizrohr (10) ein elektrisch leitfähiges Rohr ist, dessen Enden (A, C) an eine elektrische Stromversorgung (19) angeschlossen sind.

3. Vorrichtung nach Anspruch 2, dadurch gekennzeichnet, daß das Heizrohr (10) ein rotationssymmetrischer Zylinder ist.

4. Vorrichtung nach Anspruch 2 oder 3, dadurch gekennzeichnet, daß die elektrische Stromversorgung (19) ein Niederspannungsgenerator für hohe Stromstärke ist.

5. Vorrichtung nach einem der Ansprüche 2 bis 4, dadurch gekennzeichnet, daß in der Zone der Aussparung (14) das Heizrohr (10) wenigstens eine leitfähige Überbrückung (25) umfaßt, welche die Aussparung (14) querschnittsmäßig im unteren Teil des Rohres kompensiert, so daß eine Überhitzung an dieser Stelle vermieden wird.

6. Vorrichtung nach Anspruch 5, dadurch gekennzeichnet, daß die Überbrückung (25) durch zwei leitfähige Flügel gebildet ist, die seitlich an jeden Rand der Öffnung des Heizrohres (10) angelötet sind.

7. Vorrichtung nach einem der vorstehenden Ansprüche, dadurch gekennzeichnet, daß die Aussparung (14) durch einen Ausschnitt (15, 16, 17) mit traperzförmigem Profil gebildet ist.

8. Vorrichtung nach einem der vorstehenden Ansprüche, dadurch gekennzeichnet, daß die Lötstation (20, 21) durch eine Lotquelle gebildet ist.

9. Vorrichtung nach Anspruch 8, dadurch gekennzeichnet, daß die Lotquelle zwei Leitungen (21) für die Lotzuführung umfaßt, welche in ein Lotbad (50) eingetaucht sind und einander gegenüberliegend auf der Durchgangsbahn der Bauteile (4) ausmünden.

10. Vorrichtung nach Anspruch 9, dadurch gekennzeichnet, daß die zwei Lotzufuhrleitungen (21) einander gegenüberliegend über eine Öffnung (55) eines Lotbeckens (60) ausmünden.

11. Vorrichtung nach Anspruch 9 oder 10, dadurch gekennzeichnet, daß sie eine Vorrichtung (53, 54, 56) umfaßt, um ein neutrales Gas um die Lotzufuhrleitungen (21) herum strömen zu lassen, so daß eine Oxidation des Lots verhindert wird.

12. Vorrichtung nach Anspruch 11, dadurch gekennzeichnet, daß die Vorrichtung, um ein neutrales Gas strömen zu lassen, eine Zufuhr (56) des neutralen, unter Druck stehenden Gases oberhalb des Pegels des Lotbades (50) umfaßt, so daß eine Vorerwärmung des genannten Gases erzeugt wird.

13. Vorrichtung nach Anspruch 11, dadurch gekennzeichnet, daß die genannte Vorrichtung, um ein neutrales Gas strömen zu lassen, eine Zufuhr (56) für das neutrale Gas unter Druck umfaßt, welche durch einen Rohrabschnitt (70) verlängert ist, der in das Lotbad (50) eingetaucht ist, und einen Austrittskanal (71) aufweist, welcher das während des Durchströmens durch das in das Lotbad (50) eingetauchte Rohr (70) vorerwärmte Gas gegen die Lotzufuhrleitungen (21) richtet.

14. Vorrichtung nach Anspruch 12 oder 13, dadurch gekennzeichnet, daß sie Wandungen umfaßt, welche die neutralgasströmung um die Leitungen (21) herum zum Innenraum des Heizrohres (10) kanalisieren, derart, daß eine Spülung desselben mit dem vorerwärmten Gas gewährleistet wird.

15. Vorrichtung nach einem der vorstehenden Ansprüche, dadurch gekennzeichnet, daß für einen gegebenen Bauteiltyp die Vorschubgeschwindigkeit derart ist, daß sie einen Temperaturanstieg des Bauteils (4) gewährleistet, bis dieses im Bereich der Aussparung (14) etwa die Löttemperatur erreicht hat.

16. Vorrichtung nach Anspruch 15, dadurch gekennzeichnet, daß die Aussparung auf 4/5 der Länge des Heizrohres (10) liegt.

**0 112 229**

## FIG_1

GENERATEUR BASSE TENSION

## FIG_2

## FIG_5

1

# FiG_3-a

# FiG_3-b

# FiG_4

2